(19) Europäisches Patentamt
European Patent Office
Office européen des brevets

(11) **EP 1 956 233 A1**

(12) **EUROPÄISCHE PATENTANMELDUNG**

(43) Veröffentlichungstag:
**13.08.2008  Patentblatt 2008/33**

(51) Int Cl.:
*F02P 23/04* *(2006.01)*

(21) Anmeldenummer: **08002166.0**

(22) Anmeldetag: **06.02.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **09.02.2007  AT 2152007**

(71) Anmelder: **GE Jenbacher GmbH & Co. OHG**
**6200 Jenbach (AT)**

(72) Erfinder:
• **Klausner, Johann**
  **6391 St. Jakob i.H. (AT)**
• **Kopecek, Herbert**
  **85399 Halbergmoos (DE)**
• **Reider, Georg**
  **1170 Wien (AT)**

(74) Vertreter: **Gangl, Markus et al**
**Torggler & Hofinger**
**Patentanwälte**
**Wilhelm-Greil-Straße 16**
**6020 Innsbruck (AT)**

(54) **Laserzündeinrichtung für eine Brennkraftmaschine**

(57)  Zündeinrichtung für eine Brennkraftmaschine, insbesondere einen Gasmotior mit einer Laserlichterzeugungsvorrichtung (1) zur Einkopplung von, insbesondere zündfähigem, Laserlicht (2) in einen Brennraum (4) der Brennkraftmaschine, wobei die Laserlichterzeugungsvorrichtung (1) dazu ausgebildet ist, zumindest dichromatisches Laserlicht (2), vorzugsweise auf einen gemeinsamen Fokusbereich (3); in den Brennraum (4) einzukoppeln.

*Fig. 1*

## Beschreibung

Die vorliegende Erfindung betrifft eine Zündeinrichtung für eine Brennkraftmaschine, insbesondere einen Gasmotor, mit einer Laserlichterzeugungsvorrichtung zur Einkopplung von, insbesondere zündfähigem, Laserlicht in einen Brennraum der Brennkraftmaschine. Darüber hinaus betrifft die Erfindung eine Brennkraftmaschine, insbesondere einen Gasmotor, mit einer solchen Zündeinrichtung.

Bei der Laserzündung von brennbaren Gemischen erzeugt beim Stand der Technik ein meist gepulster Laserstrahl eine derart hohe Feldstärke im Fokus einer strahlbündelnden Linse, dass die gasförmigen Moleküle ionisiert werden und ein Plasma entsteht. Die beiden maßgeblich daran beteiligten physikalischen Effekte werden in der Fachliteratur als Multiphotonenionisation und inverser Bremsstrahlungseffekt bezeichnet. Beide Effekte führen zur Ionisation von Materie.

Die beim Stand der Technik bekannten gattungsgemäßen Zündeinrichtungen kämpfen jedoch immer noch mit dem Problem, dass es technisch schwierig ist, ausreichend Energie zur Entzündung des Plasmas kostengünstig und einfach im Fokusbereich zur Verfügung zu stellen.

Aufgabe der Erfindung ist es, eine gattungsgemäße Zündeinrichtung zu schaffen, die kosten- und energieeffizient, die im Fokus zur Zündung benötigte Energie zur Verfügung stellt.

Dies wird erfindungsgemäß erreicht, indem die Laserlichterzeugungsvorrichtung dazu ausgebildet ist, zumindest dichromatisches Laserlicht, vorzugsweise auf einen gemeinsamen Fokusbereich, in den Brennraum einzukoppeln.

Bevorzugt ist vorgesehen, dass das zumindest dichromatische Laserlicht in seinem Leistungsspektrum zumindest zwei bezüglich ihrer Wellenlänge voneinander getrennte lokale Maxima aufweist.

Die Erfindung beruht unter anderem auf der Erkenntnis, dass die Multiphotonenionisation und der inverse Bremsstrahlungseffekt eine deutlich unterschiedliche Abhängigkeit von der Wellenlänge der ursächlichen Laserstrahlung aufweisen. Während die Multiphotonenionisation bei kurzen Wellenlängen stärker in Erscheinung tritt, da diese von der höheren Photonenenergie profitiert, dominiert der inverse Bremsstrahlungseffekt bei größeren Wellenlängen. Darüber hinaus ist auch die Druckabhängigkeit der Plasmabildung bei beiden Effekten unterschiedlich. Beides hat zur Folge, dass die zur Erzeugung eines Zündfunkens benötigte Laserenergie signifikant von der Emissionswellenlänge der Laserlichterzeugungsvorrichtung abhängt. Darüber hinaus ist zu beachten, dass kurzwelliges Licht sich besser fokussieren lässt als langwelliges Licht. Was für die konkrete Anwendung bedeutet, dass bei kurzwelligerem Licht bei Verwendung der gleichen Fokussierungsoptik geringere Pulsenergien zum Erreichen der Durchbruchsschwelle und damit zur Erzeugung des Laserfunkens ausreichen. Dem bisherigen Erkenntnisstand nach, reicht ein Plasma noch nicht unbedingt aus, um das Brennstoffluftgemisch im Brennraum auch erfolgreich zu zünden. Hierzu bedarf es, abhängig von der Gemischzusammensetzung, den Druck- und Temperaturverhältnissen im Gemisch als auch vom Strömungszustand, zusätzlicher Laserenergie die dem Plasma zugeführt werden muss. Eine Grundidee der Erfindung ist es nun, Laserstrahlung zur Zündung einzusetzen, die aus mindestens zwei Strahlungsanteilen mit unterschiedlichen Wellenlängen besteht. Hierbei ist die kurzwellige Strahlung zunächst einmal aus den oben genannten Gründen hauptsächlich für die Erzeugung des Initialplasmas verantwortlich, während die langwellige Strahlung das Plasma mit weiterer Energie versorgt und somit die räumliche Ausdehnung des Plasmas vergrößert. Letzteres begünstigt das Entflammen des Brennstoffluftgemisches. Der Vorteil dieser Vorgehensweise bei der Zündung liegt darin, dass der Gesamtbedarf an Laserenergie erheblich kleiner ausfallen kann als dies mit einer monochromatischen Laserlichterzeugungsvorrichtung möglich ist, da bei diesen, beim Stand der Technik bekannten Einrichtungen die Wellenlängenabhängigkeit der bei der Zündung beteiligten physikalischen Prozesse nicht im positiven Sinn genützt werden kann.

Grundsätzlich ist es möglich, die dichromatische Laserstrahlung mittels zweier unabhängiger Laserlichterzeugungsvorrichtungen zu erzeugen, was aber gewisse Nachteile aufgrund der sehr exakten Anforderung an die räumliche und zeitliche Synchronisation der beiden Laserlichterzeugungsvorrichtungen aufweist. Auf Grund der höheren Komplexität und den damit verbundenen Kosten sowie der Anfälligkeiten des Zündsystems ist diese Ausgestaltungsmöglichkeit aber eher zweitrangig. Wesentlich interessanter ist das Konzept, welches von der beim Stand der Technik an sich bekannten Frequenzvervielfachung, insbesondere Frequenzverdopplung, bzw. parametrischen Frequenzkonversion Gebrauch macht. Hierbei kann ein Medium mit stark ausgeprägten nicht linearen optischen Eigenschaften, wie zum Beispiel KTP (Kaliumtitanylphosphat), KDP (Kaliumdihydrogenphosphat), $LiNBO_3$ oder BBO ($\beta$-$BaB_2O_4$) verwendet werden, um Laserlicht durch optische Frequenzvervielfachung oder parametrische Konversion in ein kurzwelligeres oder langwelligeres Licht umzuwandeln. Ein Beispiel hierfür wäre die Umwandlung von infrarotem Licht mit einer Wellenlänge von 1064 nm (Nanometer) in ein grünes Laserlicht mit 532 nm. Da diese Wellenlängenkonvertierungsprozesse beim Einsatz konventioneller Technik in ihrer Effizienz mit etwa 50 % limitiert sind, bleibt ca. die Hälfte der Strahlungsenergie in ihrer ursprünglichen Wellenlänge im Laserlicht vorhanden, sodass das insgesamt eingestrahlte Laserlicht zumindest dichromatisch ist. Bei der parametrischen Konversion kann das Wellenlängenverhältnis insbesondere durch Kristallorientierung und/oder Anlegen von gewissen Temperaturen und/oder elektrischen Feldern und/oder Drücken an das Medium mit den stark ausgeprägten nicht linearen optischen Eigenschaften eingestellt werden. Eine Ausführungsform der Erfindung ist es somit, einen solchen frequenzvervielfachten, insbesondere frequenzverdoppelten, bzw. parametrisch konvertierten Laserlichtstrahl gegebenenfalls gemeinsam mit dem ursprünglichen Strahl zur Zündung zu verwenden. Um dichromatisches Licht zu erhalten, wird in der Laserlichterzeugungsvorrichtung der Anteil des Laserstrahls mit der ursprünglichen Wellenlänge nicht geblockt sondern gemeinsam mit dem neu generierten Anteil in den Brennraum des Motors eingeleitet. Da beide Anteile bei dieser Ausführungsform aus derselben Quelle stammen, laufen beide Strahlen exakt entlang derselben optischen Achse, womit eine externe, immer mit zusätzlichem Aufwand behaftete Kollinearisierung beider Strahlungsanteile entfallen kann. Das hierfür benötigte, meist als Kristall ausgebildete Medium mit stark ausgeprägten nicht linearen optischen Eigenschaften erhöht die Systemkomplexität in nur geringem Masse, zumal dieses Medium sowohl innerhalb als auch außerhalb eines Laserresonators der Laserlichterzeugungsvorrichtung angeordnet werden kann und damit ein monolithischer Aufbau des Resonators weiterhin möglich ist. Auch die gesamte Energiebilanz sieht bei Laserlichterzeugungsvorrichtungen für dichromatisches Laserlicht nicht ungünstiger als für den bisher verwendeten monochromatischen Laser aus, da - wie bereits erwähnt - sowohl die konvertierten als auch unkonvertierten Wellenlängenanteile des Laserlichts in den Brennraum geleitet werden. Zusätzliche Verluste sind gering und im Regelfall vernachlässigbar. Die nichtlineare optische Frequenzkonversion kann z.B. mit Methoden der Phasenanpassung, beispielsweise in der Literatur als Typ I oder Typ II oder mit Hilfe periodisch gepolter nichtlinearer Medien erfolgen (in der Literatur als Quasi-Phasenanpassung bekannt).

Im Fall der Frequenzvervielfachung unterscheiden sich die beiden, in den Brennraum gelangenden Wellenlängen naturgemäß um den Vervielfachungsfaktor n (somit gilt: $\lambda_1 = n\lambda_2$ mit n = natürliche Zahl $\geq$ 2), bei Frequenzverdopplung also um den Faktor n = 2. Bevorzugt kann dabei vorgesehen sein, dass die Wellenängen zueinander eine feste Phasenbeziehung (wechselseitige Kohärenz) aufweisen. Weiters kann bevorzugt vorgesehen ein, das die relative Phasenlage der beiden Wellen des dichromatischen Laserlichts zueinander durch eine dichroische Phasenverzögerungsplatte im Strahlengang (beispielsweise aus Glas) zur Optimierung des Zündvorganges eingesellt wird. Kurzwelliges und langwelliges Laserlicht können so für den optimalen Zündvorgang aufeinander abgestimmt werden. Dabei kann vorgesehen sein, dass die beiden Wellen dieselbe lineare Polarisation aufweisen, was zum Beispiel durch geeignete doppelbrechende Platten einstellbar ist. Weiters kann vorgesehen sein, dass zur Fokussierung des Laserlichtes eine Linse bzw. ein Linsensystem vorgesehen ist, deren/dessen Dispersion derart ausgebildet ist, dass die Wellenlängen in einem für die Zündung optimalen Abstand zueinander fokussiert werden. Im Fall der parametrischen optischen Konversion entstehen aus einem Photon zumindest zwei längerwelligere Photonen. Im Rahmen dessen ist der Konversionsfaktor prinzipiell frei wählbar. Um die erwähnten wellenlängenabhängigen Effekte signifikant zur Wirkung zu bringen, ist es jedoch günstig, ein Verhältnis der beteiligten Wellenlängen von mindestens 1 zu 1,25, vorzugsweise in Nanometer (nm) gemessen, anzustreben. Der spektrale Abstand der beiden Maxima bzw. Anteile sollte günstigerweise größer als die größte Linienbreite der Maxima bei der jeweils halben Maximalamplitude sein. Diese Linienbreite wird beim Stand der Technik als FWHM (full width at half maximum) - Linienbreite bezeichnet.

Besonders bevorzugt ist vorgesehen, wenn ein erstes der zumindest zwei Maxima in einem Wellenlängenbereich zwischen 1 $\mu$m und 0,2 $\mu$m, vorzugsweise zwischen 0,6$\mu$ m und 0,2 $\mu$m, liegt und/oder ein zweites der zumindest zwei Maxima in einem Wellenlängenbereich zwischen 10 $\mu$m und 1 $\mu$m, vorzugsweise zwischen 2,5 $\mu$m und 1 $\mu$m, liegt.

Grundsätzlich ist es denkbar, eine Laserlichterzeugungsvorrichtung erfindungsgemäß vorzusehen, die kontinuierlich oder quasi kontinuierlich dichromatisches Laserlicht in den Brennraum einkoppelt. Bevorzugt ist es jedoch, wenn die Laserlichterzeugungsvorrichtung dazu ausgebildet ist, das zumindest dichromatische Laserlicht in Form zumindest eines zeitlich begrenzten Laserlichtpulses abzugeben.

Darüber hinaus kann auch vorgesehen sein, dass die Laserlichterzeugungsvorrichtung dazu ausgebildet ist, zumindest zwei zeitlich voneinander getrennte in sich zeitlich begrenzte Laserlichtpulse abzugeben, wobei beide Laserlichtpulse zumindest dichromatisches Laserlicht aufweisen oder der zeitlich zweite Laserlichtpuls in seinem Leistungsspektrum zumindest ein bei einer anderen, vorzugsweise größeren, Wellenlänge auftretendes Maximum aufweist als der zeitlich erste Laserlichtpuls.

Für die optimale Ausnützung der Laserenergie der nachfolgenden Pulse sollte der zeitliche Abstand (Delay), gerechnet zwischen dem Maximum des vorhergehenden Pulses und dem Maximum des nachfolgenden Pulses, zwischen den Pulsen 10 ns bis 200 ns (Nanosekunden), vorzugsweise 30 ns bis 70 ns betragen. Innerhalb dieses Delays koppelt die Strahlung nachfolgender Pulse effizient an das vorhandene Plasma des vorhergehenden Pulses an, ohne selbst die für die Plasmabildung notwendige hohe Schwellintensität erreichen zu müssen. Bei längeren Delays über 200 ns ist das Plasma so weit abgekühlt, dass die Laserstrahlung nicht mehr ankoppelt und durch das entstehende heiße Gasvolumen ohne Plasmabildung hindurchtritt. In diesem Fall ist die für die Plasmabildung notwendige Schwellintensität sogar höher als im Normalfall.

Die Laserlichtpulse haben günstiger Weise eine relativ kurze Dauer. Bevorzugt ist dabei, dass der zumindest eine Laserlichtpuls oder zumindest einer, vorzugsweise jeder, der zumindest zwei zeitlich voneinander getrennten Laserlichtpulse eine Dauer zwischen 0,1 ns und 3 ns, vorzugsweise zwischen 0,1 ns und 0,1 ns, aufweist (aufweisen).

Einsatz finden derartige Zündeinrichtungen beispielsweise in Brennkraftmaschinen, insbesondere Gasmotoren, aber auch z.B. Flugzeugturbinen, Raketentriebwerken etc.

Im folgendem werden weitere Einzelheiten und Merkmale der Erfindung anhand von verschiedenen erfindungsgemäßen Ausführungsbeispielen erläutert. Dabei zeigen:

Fig. 1        beispielhaft ein Leistungsspektrum von dichromatischem Laserlicht,

Fig. 2        schematisch die wesentlichen Elemente einer erfindungsgemäßen Laserlichterzeugungsvorrichtung,

Fig. 3 und 4  verschiedene, zur Erzeugung von dichromatischem Laserlicht geeignete Resonatoren,

Fig. 5 und 6  Ausführungsbeispiele zur Erzeugung zweier zeitlich voneinander beabstandeter Laserlichtpulse gemäß der Erfindung,

Fig.7         beispielhaft eine Anordnung zur Erzeugung von dichromatischem Laserlicht und

Fig. 8a-8d    Diagramme der Feldstärke als Funktion der Zeit.

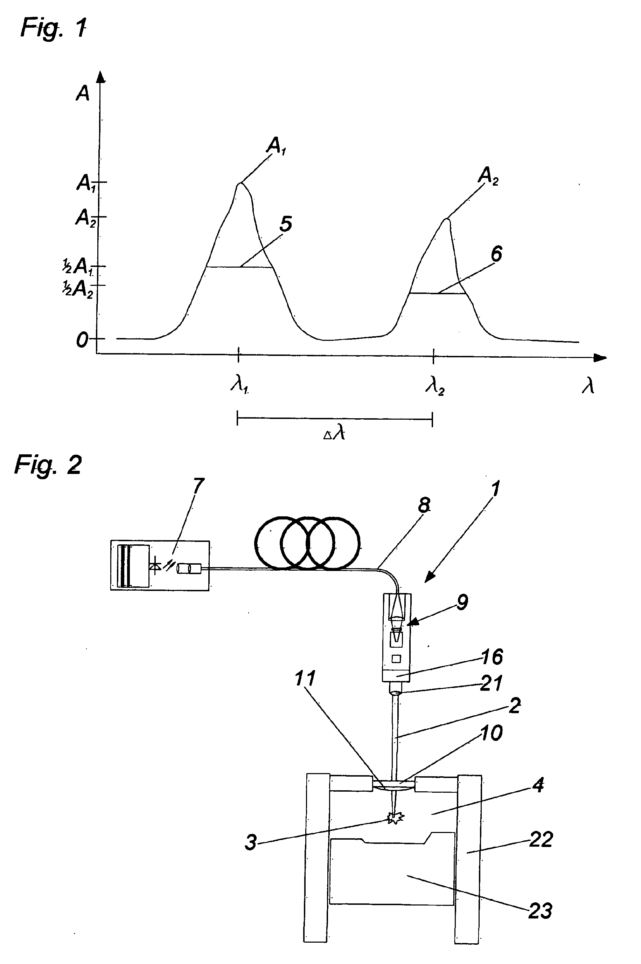

In Fig. 1 ist beispielhaft, das - wie an sich bekannt berechnete - Leistungsspektrum A eines erfindungsgemäßen dichromatischen Laserlichtpulses gegen seine Wellenlänge $\lambda$ aufgetragen. Im Spektrum sind zwei voneinander getrennte, lokale Maxima $A_1$ und $A_2$ zu erkennen. Das Maximum $A_1$ tritt bei der Wellenlänge $\lambda_1$, das Maximum $A_2$ bei der Wellenlänge $\lambda_2$ auf. Eingezeichnet sind auch die Linienbreiten 5 und 6 bei der jeweils halben Maximalamplitude (½$A_1$ bzw. ½ $A_2$). Die Linienbreiten 5 und 6 sind damit die so genannten FWHM (full width at half maximum) - Linienbreiten. Der Wellenlängenabstand $\Delta\lambda$ zwischen den Maxima $A_1$ und $A_2$ ist dabei sowohl größer als die Linienbreite 5 des ersten Maximums $A_1$ als auch die Linienbreite 6 des zweiten Maximums $A_2$.

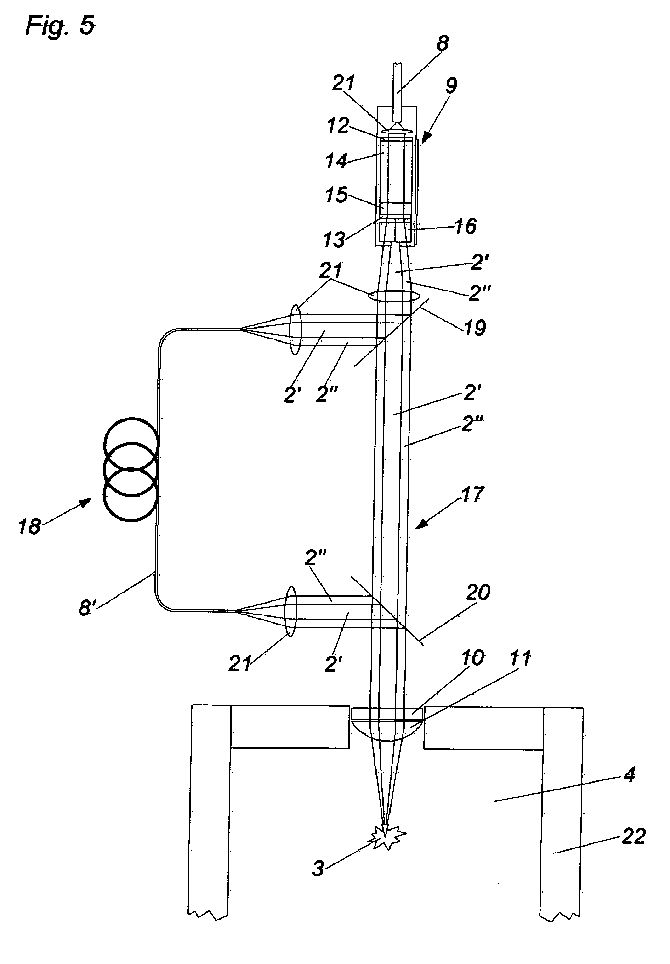

Fig. 2 zeigt eine bevorzugte Ausführungsform einer Laserlichterzeugungsvorrichtung 1 gemäß der Erfindung. Diese weist zunächst - wie an sich bekannt - eine Pumplichtquelle 7 auf. Über den Lichtwellenleiter 8 oder über eine andere geeignete Optik wird das Pumplicht in den Resonator 9 eingespeist. Zur parametrischen Wellenlängenkonversion bzw. zur Frequenzvervielfachung und insbesondere Frequenzverdopplung ist dem Resonator ein Medium 16 mit nichtlinearen optischen Eigenschaften nachgeschaltet. Über die Linsenanordnung 21 des Brennraumfensters 10 sowie die Einkopplungsoptik 11 wird das so erzeugte dichromatische Laserlicht 2 dann auf den Fokusbereich 3 in den Brennraum 4 eingekoppelt. Dieser befindet sich - wie an sich bekannt - im Zylinder 22 und wird nach unten vom Kolben 23 begrenzt. Im Fokusbereich 3 wird bevorzugt durch den kurzwelligen Anteil des dichromatischen Laserlichts ein Initialplasma erzeugt, welches durch den langwelligen Laserlichtanteil vergrößert und weiter mit Energie gespeist wird, bis es zur Zündung kommt. Bei einer besonders bevorzugten Ausführungsvariante kann dann in einer letzten Phase wiederum kurzwelliges Laserlicht den Energiegehalt des Plasmas noch über den durch das langwellige Laserlicht erreichbaren Wert erhöhen, wobei ein dritter wellenlängenabhängiger Effekt berücksichtigt wird. Dieser ist die Reflexion des Laserlichts am Plasma, sobald dieses eine bestimmte, so genannte kritische Dichte (= Anzahl der freien Elektronen pro Volumen) überschreitet. In Folge dieser Reflexion kann keine weitere Laserenergie mehr dem Plasma zugeführt werden. Die kritische Plasmadichte ist jedoch von der Wellenlänge des Lichtes abhängig. So kann, wenn für eine bestimmte Wellenlänge die kritische Dichte erreicht ist, mit kürzerer Wellenlänge noch weiterhin Energie in das Plasma eingebracht werden. Nützt man dies, so wird der kurzwellige Anteil zunächst zur Erzeugung des Initialplasmas genutzt. Daraufhin erfolgt mit hoher Effizienz mittels des langwelligen Anteils das Aufheizen und Vergrößern des Plasmas. Diese Art des Energieeintrags in das Plasma endet mit dem Erreichen der für diese Wellenlänge kritischen Plasmadichte, woraufhin mittels des kurzwelligen Laserlichtanteils noch zusätzlich Energie eingebracht werden kann. Zur Optimierung dieses Prozesses kann der kurzweilige Anteil auch in zwei Teile aufgeteilt werden, von denen der eine zur Initialzündung des Plasmas und der andere nach einer geeigneten zeitlichen Verzögerung, z.B. durch eine Verzögerungsstrecke, deren Verzögerungsdauer etwa der Impulsdauer der Strahlung zu entsprechen hat, als Nachbrennerimpuls eingesetzt werden. Eine Variante, wie man Anteile des oder den gesamten dichromatischen Laserlichtpuls auf eine Verzögerungsstrecke 18 zunächst aus- und dann wieder einkoppeln kann, ist in Fig. 5 gezeigt und wird weiter unten erläutert.

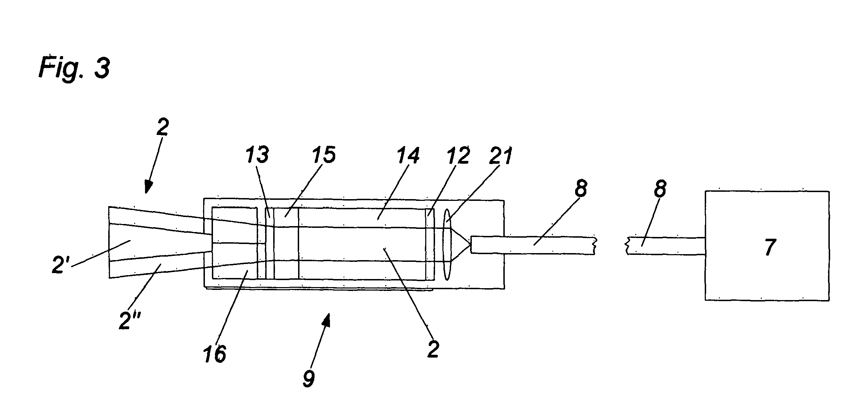

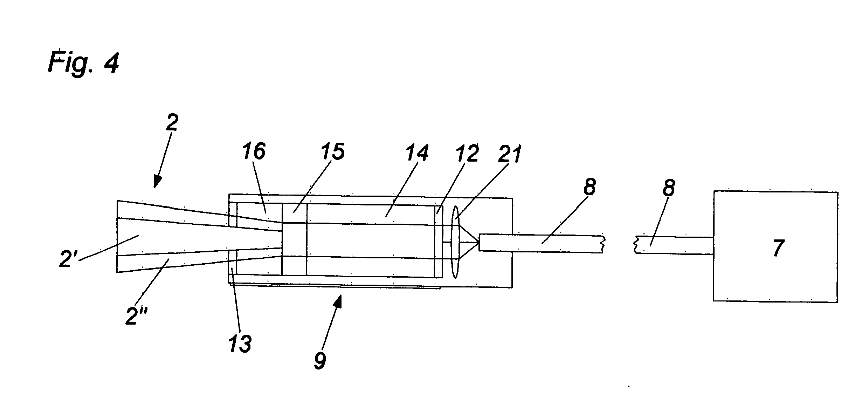

Die Fig. 3 und 4 zeigen nun zunächst, wie Laserresonatoren 9 ausgebildet sein können, um dichromatisches Laserlicht gemäß der Erfindung zu erzeugen. Bei beiden Ausführungsvarianten handelt es sich um so genannte longitudinal gepumpte Laserresonatoren 9. Dies bedeutet aber nicht, dass erfindungsgemäß nicht auch andere, wie zum Beispiel so genannte transversal gepumpte, Laserresonatoren zum Einsatz gebracht werden könnten.

In den Fig. 3 und 4 wird das von der Pumplichtquelle 7 stammende Pumplicht mittels des Lichtwellenleiters 8 und der Linsenanordnung 21 über den Resonatoreinkoppelspiegel 12 in das laseraktive Medium 14 eingekoppelt. In beiden Ausführungsbeispielen ist dem laseraktiven Medium 14 dann ein Güteschalter 15 - wie an sich bekannt - nachgeschaltet. In dem Ausführungsbeispiel gemäß Fig. 3 folgt auf den Güteschalter (Q-Switch) 15 wie auch sonst üblich der Resonatorauskoppelspiegel 13 und erst anschließend das zur parametrischen Wellenlängenkonversion oder Frequenzvervielfachung genutzte Medium 16 mit nichtlinearen optischen Eigenschaften. Beim Ausführungsbeispiel gemäß Fig. 4 ist dieses Medium 16 zwischen dem Resonatorauskoppelspiegel 13 und dem Güteschalter 15, also integriert in den Resonator 9, angeordnet. In beiden Ausführungsbeispielen verlässt das Medium 16 mit nicht linearen optischen Eigenschaften ein dichromatischer Laserlichtstrahl 2, welcher eventuell aber nicht notwendigerweise räumlich unterschiedlich verteilte Anteile 2' und 2" aufweist. Die Aufteilung des dichromatischen Laserlichts in die hier schematisch dargestellten Anteile 2' und 2" entsteht durch die unterschiedlichen Fokussierungseigenschaften der beiden Anteile mit verschiedenen Wellenlängen. Dabei ist darauf hinzuweisen, dass trotz der unterschiedlichen Fokussierungseffekte die optischen Übertragungseinrichtungen so ausgelegt sein sollten, dass im Fokusbereich 3, in dem das Plasma im Brennraum 4 gebildet wird, der stärker fokussierte Bereich günstiger Weise innerhalb des weniger fokussierten Laserlichtanteils liegt.

Fig. 5 zeigt nun eine bevorzugte Ausführungsvariante, wie aus einem, mittels des Laserresonators 9 gemäß Fig. 3 erzeugten dichromatischen Laserlichtpuls 2 zwei zeitlich verzögerte Laserlichtpulse erzeugt werden können. Hierfür ist eine optisch kürzere Wegstrecke 17, auf der ein Teil des Laserlichtpulses auf direktem Wege in den Brennraum 4 eingekoppelt wird, und eine demgegenüber optisch längere Verzögerungswegstrecke 18 vorgesehen. Zum Auskoppeln eines Teils des Laserlichtpulses in die Verzögerungswegstrecke 18 ist ein zumindest bereichsweise semitransparenter Verzögerungsauskoppelspiegel 19 im Strahlenverlauf angeordnet. An diesem wird ein Teil des Laserlichtpulses reflektiert und über die Linsenanordnung 21 in den Lichtwellenleiter 8 eingekoppelt. In diesem durchläuft das Laserlicht eine optisch längere Wegstrecke, was zu der gewünschten Verzögerung führt. Um auch diesen Laserlichtanteil in den Fokusbereich 3 zu lenken, kann günstiger Weise vorgesehen sein, dass dieser verzögerte Laserlichtanteil über den ebenfalls semitransparenten Verzögerungseinkoppelspiegel 20 wieder auf die Wegstrecke 17 eingekoppelt wird. Natürlich wäre es auch möglich, in Abwandlung dieses Ausführungsbeispiels den verzögerten Laserlichtanteil über eigene - hier nicht dargestellte - Einkoppelungsoptiken direkt - also ohne Verzögerungseinkoppelspiegel 20 - in den Fokusbereich 3 einzukoppeln. Allerdings ist es grundsätzlich günstig, die Zahl der Brennraumfenster 10 so gering wie möglich zu halten, wodurch die hier gezeigte Variante bevorzugt ist.

Je nach Ausbildung des Verzögerungsauskoppelspiegels 19 und/oder des Verzögerungseinkoppelspiegels 20 ist es möglich, auf den beiden Wegstrecken jeweils dichromatisches Laserlicht zu führen oder mittels der beiden Wegstrecken Laserlichtanteile mit unterschiedlichen Wellenlängen zeitlich gegeneinander verzögert in den Brennraum 4 einzuspeisen. Ist zweiteres beabsichtigt, so kann zur Trennung der Lichtwellenlängenanteile die unterschiedliche Fokussierung des langwelligen und des kurzwelligen Lichtanteils 2' und 2" genutzt werden. Es könnte zum Beispiel vorgesehen sein, dass der Verzögerungsauskoppelspiegel 19 durch entsprechend unterschiedlich stark transmittierende bzw. reflektierende Bereich nur einen der beiden Lichtanteile 2' oder 2" über die Verzögerungswegstrecke 18 umleitet und damit zeitlich gegenüber dem anderen Lichtwellenanteil verzögert. Dasselbe ist über entsprechend ausgebildete Reflektionseigenschaften und Transmissionseigenschaften des Verzögerungseinkoppelspiegels 20 möglich. Hierdurch kann nahezu frei gestaltet werden, welcher Lichtwellenanteil zu welchem Zeitpunkt in den Fokusbereich 3 gelangt. Anstelle des Lichtwellenleiters 8 können natürlich auch geeignete Spiegelanordnungen oder dergleichen zur Erzeugung der Verzögerungswegstrecke 18 herangezogen werden. Darüber hinaus ist es natürlich auch möglich, mehrere Verzögerungswegstrecken 18 mit unterschiedlichen optischen Weglängen zu verwenden, um einer Abfolge von mehreren Laserlichtimpulsen zu generieren. Die Lichtwellenlängenanteile der einzelnen Pulse können dann wiederum über die gegebenenfalls bereichsweise unterschiedlichen Reflexions- und Transmissionseigenschaften der Spiegel 19 und 20 bzw. der entsprechend zusätzlich angeordneten Verzögerungsauskoppel- und einkoppelspiegel gesteuert werden.

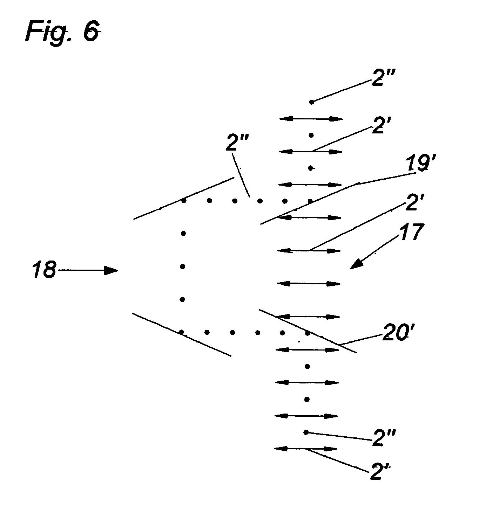

Fig. 6. zeigt schematisch wie die Auskopplung eines Teils 2" des Laserlichtes in eine Verzögerungswegstrecke 18 unter Ausnutzung von unterschiedlichen Polarisationen der Lichtanteile 2' und 2" mittels eines Polarisations-Strahlteilers möglich ist. Dabei ist - im hier gezeigten Beispiel - der Anteil des Lichtanteils 2' im Wesentlichen senkrecht zum Lichtanteil 2" polarisiert. Diese unterschiedlichen Polarisationen können durch die nicht linearen optischen Prozesse im Medium 16 oder durch wellenlängenabhängige doppelbrechende Platten erzeugt werden. Die Aufteilung in die Anteile 2' und 2" erfolgt jedenfalls an dem Verzögerungsauskoppelspiegel bzw. Polarisations-Strahlteiler 19, wobei der Anteil 2' transmittiert und der Anteil 2" reflektiert wird. Mittels des Verzögerungseinkoppelspiegels 20' werden die beiden Lichtanteile 2' und 2" wieder auf dieselbe Wegstrecke zusammengeführt. Der restliche Aufbau entspricht dann im Wesentlichen dem in Fig. 5 gezeigten.

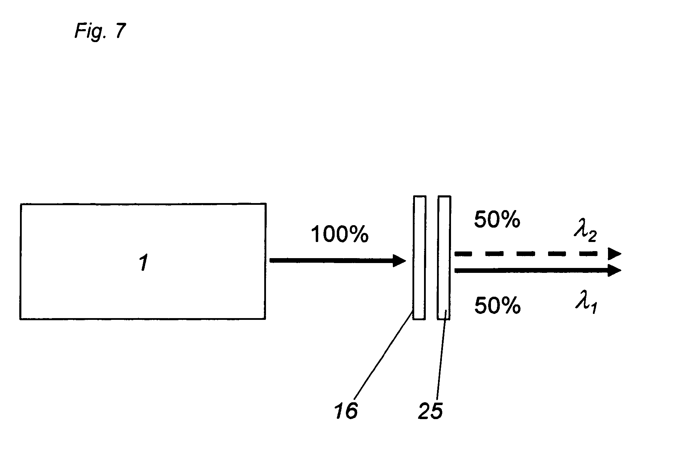

Fig. 7 zeigt schematisch eine Anordnung zur Erzeugung von dichromatischem Laserlicht. Die Anordnung umfasst eine Laserlichterzeugungsvorrichtung 1, aus der Laserlicht L1 einer bestimmten Wellenlänge $\lambda_1$ austritt mit einer Intensität von 100 %. Daran schließt ein Medium 16 mit nichtlinearen optischen Eigenschaften an. (Dieses könnte auch in der Laserlichterzeugungsvorrichtung 1 angeordnet sein.) Das Medium 16 kann z.B. eine Frequenzverdoppelung vornehmen, sodass dichromatisches Laserlicht 1 einerseits mit der ursprünglichen

Wellenlänge $\lambda_1$ und andererseits Laserlicht L2' mit Wellenlänge $\lambda_2$ von $\dfrac{\lambda_1}{2}$ austritt. Die Intensitäten L1' und L2' nach dem Medium 16 beträgt im gezeigten Ausführungsbeispiel jeweils 50 % der Intensität von L1 vor dem Medium 16. Weiters kann noch ein dispersives Element 25 vorgesehen sein, um durch gezielte Phasenverzögerung eines Teils des Laserlichtes die Phasenlage der beiden Lichtanteile aufeinander optimal abzustimmen. Beispielsweise könnte eine Glasplatte Einsatz finden. Ein nicht gezeigtes Polarisationselement (z.B. eine doppelbrechende Platte) könnte im Bedarfsfall die Polarisation von den beiden Lichtteilen abgleichen.

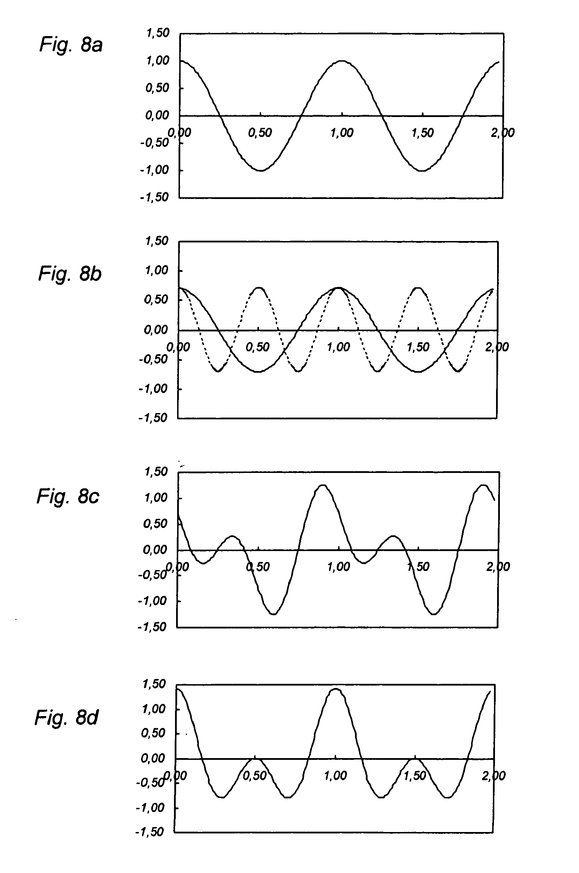

In den Fig. 8a bis 8d sind jeweils die Feldstärke als Funktion der Zeit gezeigt. Fig. 8a zeigt die Feldstärke des Laserlichtes wie von der Laserlichterzeugungsvorrichtung 1 abgegeben. In Fig. 8b sind die Feldstärken von $\lambda_1$ (durchgezogene Linie) und $\lambda_2$ (gestrichelte Linie) gezeigt, wie sei nach dem Medium 16 der Fig. 7 auftreten. Obwohl die Intensität um 50 % verringert ist, reduziert sich die Amplitude der Feldstärke nur um $\dfrac{1}{\sqrt{2}}$ (auf 70 %). Fig. 8c zeigt die Summe der Feldstärke von Fig. 8a von $\lambda_1$ und $\lambda_2$ im Vergleich zum monochromatischen Licht (Fig. 8a), so wie es aus der Laserlichterzeugungsvorrichtung 1 austritt. Wie man deutlich erkennen kann, addieren sich die Feldstärken zu neuen Maxima mit einer Überhöhung von ca. 20 %. Die höheren Feldstärken in diesen Bereichen können das Zündverhalten verbessern. Während in Fig. 8c die Phasenlage beider Lichtanteile gleich ist, zeigt die Phasenlage in Fig. 8d eine Verschiebung um 90°, sodass in manchen Bereichen eine Überhöhung der Feldstärke (im positiven Bereich) um > 40 % beobachtet werden kann. Aufgrund eines möglicherweise exponentiellen Zusammenhanges zwischen Feldstärkemaximum und dem Zündverhalten könnte eine solche 40 %-ige Überhöhung einen überproportionalen Einfluss auf das Zündverhalten ausüben.

**Patentansprüche**

1. Zündeinrichtung für eine Brennkraftmaschine, insbesondere einen Gasmotor, mit einer Laserlichterzeugungsvorrichtung zur Einkopplung von, insbesondere zündfähigem, Laserlicht in einen Brennraum der Brennkraftmaschine, **dadurch gekennzeichnet, dass** die Laserlichterzeugungsvorrichtung (1) dazu ausgebildet ist, zumindest dichromatisches Laserlicht (2), vorzugsweise auf einen gemeinsamen Fokusbereich (3), in den Brennraum (4) einzukoppeln.

2. Zündeinrichtung nach Anspruch 1, **dadurch gekennzeichnet, dass** das zumindest dichromatische Laserlicht (2) in seinem Leistungsspektrum (A) zumindest zwei bezüglich ihrer Wellenlänge ($\lambda_1$, $\lambda_2$) voneinander getrennte, lokale Maxima ($A_1$, $A_2$) aufweist.

3. Zündeinrichtung nach Anspruch 2, **dadurch gekennzeichnet, dass** das zweite Maximum ($A_2$) im Leistungsspektrum (A) bei einer mindestens 1,25 fachen, vorzugsweise bei einer mindestens 2 fachen, Wellenlänge ($\lambda_2$), vorzugsweise gemessen in Nanometer, bezogen auf die Wellenlänge ($\lambda_1$) des ersten Maximums ($A_1$) auftritt.

4. Zündeinrichtung nach Anspruch 2 oder 3, **dadurch gekennzeichnet, dass** der Wellenlängenabstand ($\Delta\lambda$) zwischen den zumindest zwei voneinander getrennten Maxima ($A_1$, $A_2$) im Leistungsspektrum (A) zumindest größer als die größte Linienbreite (5, 6) der Maxima ($A_1$, $A_2$) bei der jeweils halben Maximalamplitude ($\frac{1}{2}$ $A_1$, $\frac{1}{2}$ $A_2$) des jeweiligen Maximums ($A_1$, $A_2$) ist.

5. Zündreinrichtung nach einem der Ansprüche 2 bis 4, **dadurch gekennzeichnet, dass** ein erstes der zumindest zwei Maxima ($A_1$, $A_2$) in einem Wellenlängenbereich zwischen 1 $\mu$m und 0,2 $\mu$m, vorzugsweise zwischen 0,6 $\mu$m und 0,2 $\mu$m, liegt und/oder ein zweites der zumindest zwei Maxima ($A_1$, $A_2$) in einem Wellenlängenbereich zwischen 10 $\mu$m und 1 $\mu$m, vorzugsweise zwischen 2,5 $\mu$m und 1 $\mu$m, liegt.

6. Zündeinrichtung nach einem der Ansprüche 1 bis 5, **dadurch gekennzeichnet, dass** die Laserlichterzeugungsvorrichtung (1) dazu ausgebildet ist, das zumindest dichromatische Laserlicht (2) in Form zumindest eines zeitlich begrenzten Laserlichtpulses abzugeben.

7. Zündeinrichtung nach einem der Ansprüche 1 bis 5, **dadurch gekennzeichnet, dass** die Laserlichterzeugungsvorrichtung (1) dazu ausgebildet ist, zumindest zwei zeitlich voneinander getrennte in sich zeitlich begrenzte Laserlichtpulse abzugeben, wobei beide Laserlichtpulse zumindest dichromatisches Laserlicht aufweisen oder der zeitlich zweite Laserlichtpuls in seinem Leistungsspektrum (A) zumindest ein bei einer anderen, vorzugsweise größerer, Wellenlänge ($\lambda_2$) auftretendes Maximum ($A_2$) aufweist als der zeitlich erste Laserlichtpuls.

8. Zündeinrichtung nach Anspruch 7, **dadurch gekennzeichnet, dass** zwischen dem ersten und dem zweiten der zumindest zwei zeitlich voneinander getrennten Laserlichtpulse ein zeitlicher Abstand zwischen 10 ns und 200 ns, vorzugsweise zwischen 30 ns und 70 ns, vorgesehen ist.

9. Zündeinrichtung nach einem der Ansprüche 6 bis 8, **dadurch gekennzeichnet, dass** der zumindest ein Laserlichtpuls oder zumindest einer, vorzugsweise jeder, der zumindest zwei zeitlich voneinander getrennten Laserlichtpulse eine Dauer zwischen 0,1 ns und 3 ns, vorzugsweise zwischen 0,1 ns und 1 ns, aufweist (aufweisen).

10. Zündeinrichtung nach einem der Ansprüche 1 bis 9, **dadurch gekennzeichnet, dass** die Laserlichterzeugungsvorrichtung (1) zumindest eine Pumplichtquelle (7), vorzugsweise Laserdiode, und zumindest einen mit Pumplicht dieser Pumplichtquelle (7) speisbaren Laserresonator (9) sowie zumindest ein Brennraumfenster (10) bzw. eine Einkopplungsoptik (11) für den Brennraum (4) aufweist.

11. Zündeinrichtung nach Anspruch 10, **dadurch gekennzeichnet, dass** der oder die Laserresonator (en) (9) longitudinal gepumpt ist (sind).

12. Zündeinrichtung nach Anspruch 10 oder 11, **dadurch gekennzeichnet, dass** der Laserresonator (9) einen Resonatoreinkoppelspiegel (12) und einen Resonatorauskoppelspiegel (13) und dazwischen angeordnet ein laseraktives Medium (14) und einen Güteschalter (15) aufweist.

13. Zündeinrichtung nach einem der Ansprüche 10 bis 12, **dadurch gekennzeichnet, dass** die Laserlichterzeugungsvorrichtung (1) zur Erzeugung des dichromatischen Laserlichtes (2) zumindest ein Medium (16) mit nichtlinearen optischen Eigenschaften, vorzugsweise zur Frequenzvervielfachung oder parametrischen Frequenzkonversion, aufweist.

14. Zündeinrichtung nach Anspruch 13, **dadurch gekennzeichnet, dass** das Medium (16) mit nichtlinearen optischen Eigenschaften einem Laserresonator (9) der Laserlichterzeugungsvorrichtung (1) in Strahlrichtung des Laserlichtes (2) nachgeschaltet ist.

15. Zündeinrichtung nach Anspruch 12 und 13, **dadurch gekennzeichnet, dass** das Medium (16) mit nichtlinearen optischen Eigenschaften, vorzugsweise zwischen dem Resonatorauskoppelspiegel (13) und dem Güteschalter (15), im Laserresonator (9) angeordnet ist.

16. Zündeinrichtung nach einem der Ansprüche 1 bis 15, **dadurch gekennzeichnet, dass** die Laserlichterzeugungsvorrichtung (1) zur Erzeugung von zumindest zwei zeitlich voneinander getrennten Laserlichtpulsen eine, vorzugsweise dem Medium (16) mit nichtlinearen Eigenschaften nachgeschaltete, optisch kürzere Wegstrecke (17) für einen Anteil des Laserlichts (2) und zumindest eine demgegenüber optisch längere Verzögerungswegstrecke (18) für einen anderen Anteil des Laserlichts (2) aufweist.

17. Zündeinrichtung nach Anspruch 16, **dadurch gekennzeichnet, dass** sie zur Verzögerungsauskopplung des Laserlichts (2) in die Verzögerungswegstrecke (18) zumindest einen, vorzugsweise zumindest bereichsweise für Laserlicht (2) semitransparenten, Verzögerungsauskoppelspiegel (19) und gegebenenfalls zur Wiedereinkopplung in die optisch kürzere Wegstrecke einen, vorzugsweise zumindest bereichsweise für Laserlicht (2) semitransparenten, Verzögerungseinkoppelspiegel (20) aufweist.

18. Zündeinrichtung nach Anspruch 16 oder 17, **dadurch gekennzeichnet, dass** sie zur Verzögerungsauskopplung des Laserlichts (2) in die Verzögerungswegstrecke (18) einen Polarisations-Strahlteiler aufweist.

19. Zündeinrichtung nach einem der Ansprüche 1 bis 12, **dadurch gekennzeichnet, dass** die Laserlichterzeugungsvorrichtung (1) zur Erzeugung von zumindest dichromatischem Laserlicht (2) zumindest zwei Laserlichtquellen, vorzugsweise Laserresonatoren (9), aufweist, die dazu geeignet sind, Laserlicht (2) mit unterschiedlichen Wellenlängen ($\lambda$), vorzugsweise auf einen gemeinsamen Fokusbereich (3), in den Brennraum (4) einzukoppeln.

20. Brennkraftmaschine, insbesondere Gasmotor, mit einer Zündeinrichtung nach einem der Ansprüche 1 bis 19.

## Fig. 1

## Fig. 2

Fig. 3

**Fig. 4**

EP 1 956 233 A1

Fig. 5

11

*Fig. 6*

*Fig. 7*

*Fig. 8a*

*Fig. 8b*

*Fig. 8c*

*Fig. 8d*

**Europäisches Patentamt**

# EUROPÄISCHER RECHERCHENBERICHT

Nummer der Anmeldung

EP 08 00 2166

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 816 674 A (SIMMONDS PRECISION ENGINE SYST [US]) 7. Januar 1998 (1998-01-07) * Anspruch 1; Abbildungen 1-5 * * Spalte 1, Zeile 50 - Zeile 57 * * Spalte 5, Zeile 11 - Zeile 15 * ----- | 1-20 | INV. F02P23/04 |
| X | US 5 876 195 A (EARLY JAMES W [US]) 2. März 1999 (1999-03-02) * Abbildungen 1-6 * ----- | 1-20 | |
| X | US 6 382 957 B1 (EARLY JAMES W [US] ET AL) 7. Mai 2002 (2002-05-07) * Spalte 18, Zeile 57 - Spalte 19, Zeile 14; Abbildungen 1,4,6; Beispiele 1,4 * ----- | 1-20 | |
| A | US 6 053 140 A (FEICHTINGER GERHARD [AT] ET AL) 25. April 2000 (2000-04-25) * Spalte 5, Zeile 43 - Zeile 50 * ----- | 1,6-9 | |
| A | EP 1 693 566 A (GE JENBACHER GMBH & CO OHG [AT]) 23. August 2006 (2006-08-23) * Absatz [0017]; Abbildung 1 * ----- | 1,10-18 | RECHERCHIERTE SACHGEBIETE (IPC) |
| X | EP 0 290 154 A (UNIV TENNESSEE RES CORP [US]) 9. November 1988 (1988-11-09) * Spalte 11, Zeile 10 - Zeile 18 * ----- | 1 | F02P H01S |
| X | JP 58 195074 A (NIPPON DENSO CO) 14. November 1983 (1983-11-14) * Zusammenfassung; Abbildung * ----- | 1 | |

Der vorliegende Recherchenbericht wurde für alle Patentansprüche erstellt

| Recherchenort | Abschlußdatum der Recherche | Prüfer |
|---|---|---|
| München | 13. Mai 2008 | Ulivieri, Enrico |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 08 00 2166

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-05-2008

| Im Recherchenbericht angeführtes Patentdokument | | Datum der Veröffentlichung | Mitglied(er) der Patentfamilie | | Datum der Veröffentlichung |
|---|---|---|---|---|---|
| EP 0816674 | A | 07-01-1998 | CA | 2207696 A1 | 24-12-1997 |
| US 5876195 | A | 02-03-1999 | AU | 3375597 A | 05-01-1998 |
| | | | WO | 9745678 A1 | 04-12-1997 |
| US 6382957 | B1 | 07-05-2002 | US | 6428307 B1 | 06-08-2002 |
| | | | US | 6413077 B1 | 02-07-2002 |
| | | | US | 6514069 B1 | 04-02-2003 |
| | | | US | 6676402 B1 | 13-01-2004 |
| US 6053140 | A | 25-04-2000 | AT | 2623 U1 | 25-01-1999 |
| | | | DE | 19911737 A1 | 07-10-1999 |
| EP 1693566 | A | 23-08-2006 | AT | 501531 A1 | 15-09-2006 |
| EP 0290154 | A | 09-11-1988 | BR | 8801973 A | 22-11-1988 |
| | | | CA | 1319827 C | 06-07-1993 |
| | | | JP | 1277125 A | 07-11-1989 |
| JP 58195074 | A | 14-11-1983 | KEINE | | |

EPO FORM P0461

Für nähere Einzelheiten zu diesem Anhang : siehe Amtsblatt des Europäischen Patentamts, Nr.12/82